# EUROPEAN PATENT SPECIFICATION

(11) **EP 2 442 256 B1**
(45) Date of publication and mention of the grant of the patent: **04.12.2013**
(21) Application number: 11150781.0
(22) Date of filing: 13.01.2011
(51) Int. Cl.: G06K 7/14

(54) **Method of encoding and decoding text on a matrix code symbol**
Verfahren zum Codieren und Decodieren von Text auf einem Matrix-Codesymbol
Procédé de codage et de décodage de texte sur un symbole de code de matrice

(30) Priority: 14.10.2010 US 904391
(43) Date of publication of application: 18.04.2012
(73) Proprietor: King Abdulaziz City for Science and Technology, Riyadh 11442 (SA)
(72) Inventor: Al-Omari, Hussein Khalid, 11442 Riyadh (SA); Khorsheed, Mohammad Sulaiman, 11442 Riyadh (SA); Alhamadi, Mohammed N., 11442 Riyadh (SA); Al-Mutairy, Yassar A., 11442 Riyadh (SA); Alqahtani, Khalid H., 11442 Riyadh (SA)
(74) Representative: Goddar, Heinz J.

(56) References cited:
- US-A- 6 024 289
- "ISO/IEC 16022:2006. Information technology. Automatic identification and data capture techinques. Data Matrix bar code symbology specification", INTERNATIONAL STANDARD ISO/IEC, XX, XX, vol. 16022, 1 January 2006 (2006-01-01), pages 1-132, XP009134368,

## Description

### FIELD OF THE INVENTION

The present invention generally relates to encoding and decoding text, and more specifically, to method of encoding and decoding text on a matrix code symbol.

### BACKGROUND OF THE INVENTION

Conventional matrix code symbol such as, data matrix barcode are well known, and are used for storing text or data. Examples of the data matrix barcode include a two dimensional data matrix, and a three dimensional data matrix. The two dimensional data matrix barcode includes a grid or a matrix of black and white pixels, representing binary "0" s and "1"s. The text or data is encoded on the two dimensional data matrix using various encoding techniques. One such encoding technique is the American Standard Code for Information Interchange (ASCII), based on ordering of the English alphabets. ASCII uses a 7-bit encoding scheme and includes definitions for 128 characters. The English ASCII values are between 000 and 255, and it takes one byte to represent an English ASCII value. Theoretically, the two dimensional data matrix includes a maximum of 1558 English characters that it can hold. If all the characters correspond to digits, the two dimensional data matrix holds a maximum of 3116 characters.

However, it was not possible to represent other languages and thus ASCII was limited to one script at a time. Thus, Unicode was introduced to represent other languages that were difficult to represent using the 128 character set. Unicode represents characters using 2 bytes and supports multilingual computer processing. As Unicode takes 2 bytes to represent a character, a lot of space is consumed to represent text in the two dimensional data matrix barcode. Moreover, the amount of information that the two dimensional data matrix holds decreases when the plurality of characters includes characters from multiple languages, and digits.

Therefore, there is a need for a method of encoding and decoding text on a matrix code symbol that reduces the amount of space required for representing the text on the matrix code symbol.

"ISO/IEC 16022:2006. Information technology. Automatic identification and data capture techniques. Data Matrix bar code symbology specification", INTERNATIONAL STANDARD ISO/IEC, XX, XX, vol. 16022, 1 January 2006 (2006-01-01), pages 6-15,116 - page 19; tables 1-6: steps are disclosed to switch between different code sets, such as ASCI or extended ASCI, while producing a data stream from data matrix symbols.

US 6 024 289 A discloses encoding a stream of character codes corresponding to data characters.

The invention is set out in claims 1, 5, 8 and 10.

### BRIEF DESCRIPTION OF THE FIGURES

The accompanying figures, where like reference numerals refer to identical or functionally similar elements throughout the separate views and which together with the detailed description below are incorporated in and form part of the specification, serve to further illustrate various embodiments and to explain various principles and advantages all in accordance with the present invention.

FIG. 1 illustrates an exemplary environment in which various embodiments of the invention may function,

FIG. 2 illustrates a flowchart of a method for encoding a text on a matrix code symbol in accordance with an embodiment of the invention.

FIG. 3 illustrates a flowchart of a method for prefixing and suffixing a transitioning code value to a predefined encoding value associated with a character of one or more characters in accordance with an embodiment of the invention.

FIG. 4 illustrates an encoding table containing one or more predefined encoded values in accordance with an embodiment of the invention.

FIG. 5 illustrates an encoding table containing one or more modified encoded values in accordance with an embodiment of the invention.

FIG. 6 illustrates a flowchart of a method of decoding a matrix code symbol in accordance with an embodiment of the invention.

FIG. 7 illustrates a flowchart of a method to identify one or more transitioning code values in one or more encoded values in accordance with an embodiment of the invention.

FIG. 8 illustrates a flowchart of a method of obtaining a corresponding predefined encoded value associated with each of one or more modified encoded values in accordance with an embodiment of the invention.

FIG. 9 illustrates an encoder for encoding text on a matrix code symbol in accordance with an embodiment of the invention.

FIG. 10 illustrates a decoder for decoding a matrix code symbol in accordance with an embodiment of the invention.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

### DETAILED DESCRIPTION OF THE INVENTION

Before describing in detail embodiments that are in accordance with the present invention, it should be observed that the embodiments reside primarily in combinations of method steps and apparatus components related to method of encoding and decoding text on a matrix code symbol. Accordingly, the apparatus components and method steps have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

Explanation provided in the detailed description section, includes procedures, steps, logic blocks, processing, and other symbolic representations of operations on data bits within a computer memory. A procedure, computer-executed step, logic block, process, etc., is here, and generally, conceived to be a self-consistent sequence of steps or instructions leading to a desired result. The steps described herein require physical manipulations of physical quantities. Usually, though not necessarily, these quantities take the form of electrical or magnetic signals capable of being stored, transferred, combined, compared, and otherwise manipulated in a computer system. Further for ease of description, these signals are referred as bits, values, elements, symbols, characters, terms, numbers, or the like.

It should be noted, however, that all of these and similar terms are to be associated with the appropriate physical quantities and are merely labels applied to these quantities for ease of description. Unless specifically stated otherwise as apparent from the following explanation, it is appreciated that throughout the present invention, explanation utilizing terms such as "modifying,", "truncating", "computing," "selecting," "receiving," "removing," "encoding," "prefixing", "suffixing", "retrieving", "mapping", "decoding" or the like, refer to the actions and processes performed by a computer system, or similar electronic computing device, that manipulates and transforms data represented as physical (electronic) quantities within the computer system's registers and memories into other data similarly represented as physical quantities within the computer system memories or registers or other such information storage, transmission or display devices.

By way of example, and not limitation, computer-usable media may comprise computer storage media and communication media. Computer storage media includes volatile and nonvolatile, removable and non-removable media implemented in any method or technology for storage of information such as computer-readable instructions, data structures, program modules or other data.

Various embodiments of the invention provide a computer implemented method of encoding and decoding text on a matrix code symbol. A first aspect of the invention is to provide a computer implemented method of encoding text on a matrix code symbol. The text includes a plurality of characters. The method includes receiving a predefined encoding value associated with each of one or more characters of the plurality of characters. The method further includes modifying the predefined encoding value associated with each of the one or more characters to obtain a corresponding modified encoding value such that a modified encoding value is shorter in length than a corresponding predefined encoding value. Thereafter, the one or more characters are encoded on the matrix code symbol using the corresponding modified encoding value.

A second aspect of the invention is to provide a computer implemented method of decoding a matrix code symbol. The method includes retrieving one or more encoded values from the matrix code symbol. The one or more encoded values may include one or more modified encoded values. The method further includes mapping each of the one or more modified encoded values with a corresponding predefined encoded value where a modified encoded value is shorter in length than a corresponding predefined encoded value. Thereafter, the corresponding predefined encoded value is decoded to determine a corresponding character.

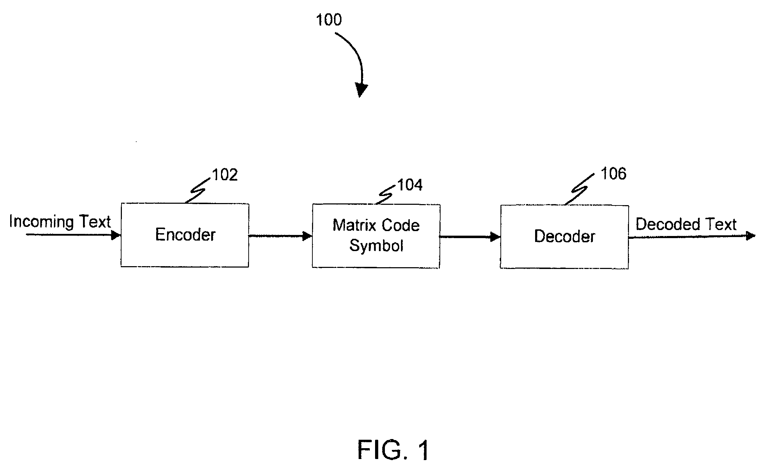

FIG. 1 illustrates an exemplary environment 100 in which various embodiments of the invention may function. Environment 100 includes an encoder 102, a matrix code symbol 104, and a decoder 104. Examples of encoder 102 may include, but is not limited to a device, a circuit, a software program, and an algorithm. Encoder 102 is configured to receive a text and encode the text before storing it on matrix code symbol 104. In an embodiment, matrix code symbol 104 may be a data matrix barcode that includes black and white cells arranged in either a square or a rectangular pattern. A black cell may represent bit 0 and a white cell may represent bit 1. Alternatively, the black cell may represent bit 1 and the white cell may represent bit 0. An amount of data that matrix code symbol 104 holds depends on dimensions of matrix code symbol 104. Examples of matrix code symbol 104 may include, but is not limited to a one dimensional data matrix, a two dimensional data matrix, and a three dimensional data matrix.

In order to encode the text, encoder 102 may use one or more character encoding schemes. Examples of the one or more character encoding schemes include, but are not limited to the American Standard Code for Information Interchange (ASCII), Unicode, Morse code, ECC200 ASCII encoding, and ISO-8859-1 scheme. Thus, encoder 102 encodes the text and stores it on matrix code symbol 104 using the one or more character encoding schemes. In order to store the encoded text on matrix code symbol 104, the encoded text may be transformed to a format that can be graphically encoded on matrix code symbol 104. For example, the encoded text is transformed to "0"s and "1"s to store it on matrix code symbol 104.

Decoder 104 is configured to retrieve the text by decoding the encoded text stored on matrix code symbol 104. Examples of decoder 104 may include, but is not limited to a device, a circuit, a software program, a scanner, a data matrix reader, and an algorithm. Decoder 104 uses a corresponding character decoding scheme associated with the one or more character encoding schemes used by encoder 102 to retrieve the text.

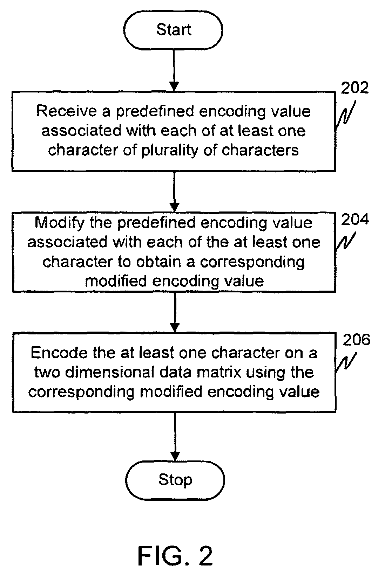

FIG. 2 illustrates a flowchart of a computer implemented method for encoding a text on a matrix code symbol in accordance with an embodiment of the invention. The matrix code symbol is a data matrix barcode that includes black and white cells arranged in either a square or a rectangular pattern. Each black cell may correspond to a bit "0" and each white cell may correspond to a bit "1". Alternatively, each black cell may correspond to a bit "1" and each white cell may correspond to a bit "0". In an embodiment, the text to be encoded on the matrix code symbol is received through a text box configured to accommodate the text. The text includes a plurality of characters and each character of the plurality of characters corresponds to one or more languages. For example, each character of the plurality of characters may correspond to an Arabic character or an English character. The Arabic characters and the English characters may appear in one of a random sequence and a predefined sequence in the text. For example, an Arabic character may always follow an English character in the text. Similarly, the Arabic characters and the English characters may appear in a random order in the text. In an embodiment, the plurality of characters may correspond to a language such as, Arabic.

Further, the plurality of characters may also include one or more of one or more white spaces, one or more lines, one or more tabs, one or more pad characters, and one or more special characters. A pad character of the one or more pad characters corresponds to a character that is used to fill an empty space. For example, if a field is seven characters in length, and only three characters have been allotted in the field, the pad character is used to fill the remaining empty spaces in the field. Whereas a special character of the one or more special characters may correspond to a symbol, a mathematical character, and a character from a non-English language.

Before encoding the text on the matrix code symbol, the text may be pre-processed to obtain a refined text. During pre-processing, the one or more special characters may be removed from the text. For example, the following text "HE*|LLO WORL^D" includes special character "*", special character "|", and special character "^". During pre-processing, the special characters are removed from the text to obtain a refined text. Thus, the refined text "HELLO WORLD" is obtained after removing the special characters. Further, the text may be analyzed to identify the plurality of characters to be encoded on the matrix code symbol. Based on the analysis, statistics may be developed for the plurality of characters present in the text. The statistics may include information about a number of characters associated with a language in the text, a number of digits in the text, a number of consecutive digits in the text, a number of white spaces, a number of new lines, a number of tabs, a number of pad characters, a number of special characters, a number of characters still to be added, a number of transition from a language to another language. For example, if the text includes one or more Arabic characters, one or more English characters, and one or more digits, the text is analyzed to develop a statistics for the text. The statistics may provide information associated with a number of Arabic characters, a umber of English characters, a number of transitions to English from Arabic, and a number of transitions to Arabic from English. Moreover, during pre-processing, information associated with the matrix code symbol may also be determined. The information may include size and dimension of the matrix code symbol.

After pre-processing the text, a character encoding scheme is utilized to encode the plurality of characters on the matrix code symbol. Example of the character encoding scheme may include, but is not limited to an ASCII encoding scheme. At step 202, a predefined encoding value associated with each of one or more characters of the plurality of characters is retrieved by the character encoding scheme from one of an ASCII table, and a Unicode table. A retrieved predefined encoding value associated with a character may correspond to one of an equivalent ASCII number, and an equivalent Unicode number. The ASCII table includes values ranging from 000 to 255 and it takes one byte to represent each character. The Unicode table includes values ranging from 0000 to FFFF in hexadecimal. Unicode uses 16 bits or 2 bytes to represent each character. Thus, Unicode requires twice as many bytes of data as compared to ASCII. Further, the Arabic Unicode characters range from 1563 to 1618.

The predefined encoding value is received based on a language associated with each of the one or more characters. For example, a predefined encoding value corresponding to an Arabic character is retrieved from range 1563 to 1618 in the Unicode table when it is determined that the character is Arabic.

In the same manner, a predefined encoding value corresponding to an English character is retrieved when it is determined that the character is English. Thus, based on the language associated with each of the one or more characters, the predefined encoding value is received.

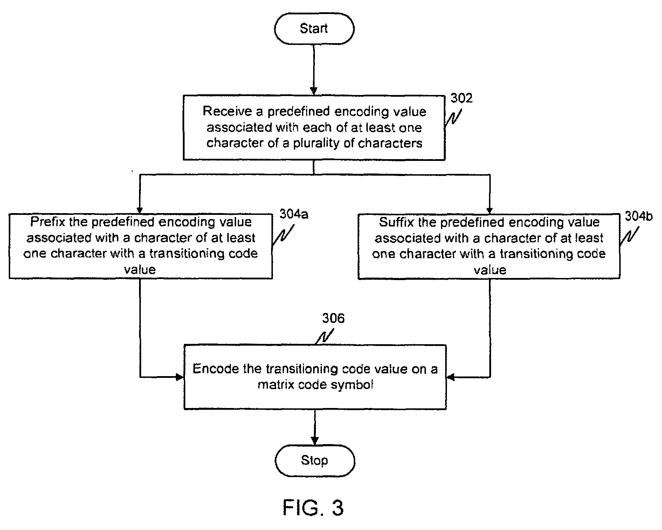

After receiving the predefined encoding value associated with each of the one or more characters, a transitioning code value is prefixed to a predefined encoding value associated with a character of the one or more characters. The transitioning code value is used to indicate that a language corresponding to a character associated with a predefined encoding value preceding the predefined encoding value is different from a language corresponding to the character associated with the predefined encoding value. Thus, the transitioning code value provides information about a transition to a language from another language in the text. For example, a transitioning code value may indicate a transition to Arabic from English in the text. In the same manner, the transitioning code value provides information about a transition to English from Arabic. This is further explained in conjunction with FIG. 3.

Alternatively, after receiving the predefined encoding value associated with each of the one or more characters, a transitioning code value is suffixed to a predefined encoding value associated with a character of the one or more characters. The transitioning code value is used to indicate that a language corresponding to a character associated with a predefined encoding value following the predefined encoding value is different from a language corresponding to the character associated with the predefined encoding value. This is further explained in conjunction with FIG. 3.

Thereafter, at step 204, the predefined encoding vale associated with each of the one or more characters is modified to obtain a corresponding modified encoding value. In an embodiment, the one or more characters may correspond to Arabic characters present in the text. A modified encoding value is shorter in length than a corresponding predefined encoding value. In an embodiment, a modified encoding value is obtained by truncating a corresponding predefined encoding value. Truncating may include removing one or more digits from the predefined encoding value. For example, a predefined encoding value "1563" associated with an Arabic character may be truncated by removing digits 1 and 5 from "1563" to obtain modified encoding value "63". In the same manner, predefined encoding value "1563" may be truncated by removing digit 1 from 1563 to obtain modified encoding value "563". As the modified encoding value is shorter in length than the corresponding predefined encoding value, it takes only one byte to represent the modified encoding value.

After obtaining the corresponding modified encoding value, at step 206, the one or more characters are encoded on the matrix code symbol using the corresponding modified encoding value. In an embodiment, one or more error correction codes may be added to the one or more modified encoding values before encoding the one or more characters on the matrix code symbol. Similarly, one or more pad characters may be added to the one or more modified encoding values before encoding on the matrix code symbol. Examples of the one or more pad characters may include a space, a bit 0, a bit 1, and a character from the Unicode table that has been reserved as a pad character. The one or more pad characters correspond to a dummy data that is added to the one or more modified encoded values during a padding operation. Examples of the padding operation may include, but are not limited to a bit padding operation, a byte padding operation, and a zero padding operation. The padding operation is performed to bring a length of encoded values in the matrix code symbol equal to a predetermined value. For example, if the predetermined value corresponds to a length five, and the number of modified encoded value is equal to two, then three pad characters are added. Thereafter, the one or more pad characters are encoded along with the one or more modified encoded values on the matrix code symbol.

FIG. 3 illustrates a flowchart of a computer implemented method for prefixing and suffixing a transitioning code value to a predefined encoding value associated with a character of the one or more characters in accordance with an embodiment of the invention. The transitioning code value is associated with a character that is not frequently used in a language. In an embodiment, the transitioning code value is associated with a transitioning character that may correspond to the one or more special characters present in the plurality of characters. Examples of the transitioning character may include, but is not limited to "|", "*", "^", and "&". It will be evident to a person skilled in the art that any other character may be used as the transitioning character. At step 302, a predefined encoding value associated with each of the one or more characters is received. After receiving the predefined encoding value, at step 304a, a transitioning code value is prefixed to a predefined encoding value associated with a character of the one or more characters. In an embodiment, the transitioning code value may correspond to an ASCII value of the transitioning character. The ASCII value is retrieved from the ASCII table. The retrieved ASCII value corresponding to the transitioning character is then prefixed to the predefined encoding value. For example, in an embodiment, "|" may be the transitioning character. The ASCII value of "|" is 124 in the ASCII table. The ASCII value is retrieved and then prefixed to the predefined encoding value.

The transitioning code value indicates that a language corresponding to a character associated with a predefined encoding value preceding the predefined encoding value associated with the character is different from a language corresponding to the character. For example, the ASCII value 124 indicates that a language corresponding to a character associated with a predefined encoding value preceding the predefined encoding value associated with the character is different from a language corresponding to the character.

Alternatively, in response to receiving the predefined encoding value associated with each of the one or more characters, at step 304b, a transitioning code value is suffixed to a predefined encoding value associated with a character of the one or more characters. In this case, the transitioning code value indicates that a language corresponding to a character associated with a predefined encoding vale following the predefined encoding vale associated with the character is different from a language corresponding to the character associated with the predefined encoding value.

As the transitioning code value is used to indicate a language transition, the transitioning character associated with the transitioning code value is specifically reserved for this purpose. Thus, any occurrence of the transitioning character in the text is deleted from the text during the stage of pre-processing. The transitioning character is deleted from the text to ensure that the text is free from the transitioning character during encoding and while prefixing or suffixing a character with a transitioning code value. After deleting the transitioning character from the text, the transitioning code value is added to indicate transition of the language in the text. For example, Table 1 illustrates an example of removing the transitioning character from the text during pre-processing.

**Table 1**

| **Text before** | **Text after** | **Barcode** |
|---|---|---|
| Hello\| This is a b\|arc\|\|ode | Hello This is a barcode | English 1 |
| 2\|D Barcode Technology 212\|895 | 2D Barcode Technology 212895 | English 2 |

As shown in an entry in the first row and first column of Table 1, the text includes four instances of the transitioning character "|". Before encoding the text on barcode named "English 1", each instance of the transitioning character is removed from the text "Hello This is a b | arc || ode" shown in Table 1. Text in first row and second column of Table 1 is obtained after removing each instance of the transitioning character from the text. Similarly, second row and first column of Table 1 illustrates a text that includes two instances of transitioning character "|" and second row and second column of Table 1 illustrates the text after removing each instance of the transitioning character from the text.

After performing one or more of prefixing the transitioning code value at step 304a, and suffixing the transitioning code value at step 304b, the transitioning code value is encoded on the matrix code symbol at step 306. The transitioning character is encoded along with the one or more characters on the matrix code symbol. In an embodiment, a bilingual text may end with an Arabic character, In such a case, a transitioning code value may be added to indicate a start of Arabic characters in the bilingual text. However, a transitioning code value is omitted at the end of the Arabic character that is present in the end of the bilingual text, and is not encoded on the matrix code symbol. As the Arabic character is not followed by an English character, the transitioning code value is not needed.

Consider an exemplary embodiment as described herein, wherein two bilingual texts are to be encoded on a matrix code symbol as illustrated in Table 2. The first bilingual text is illustrated in first row and first column in Table 1 and the second bilingual text is illustrated in second row and first column of Table 2. Each bilingual text includes a plurality of characters as shown in Table 2. Each character of the plurality of characters is associated with a language which is either English or Arabic.

**Table 2**

| **Text before** | **Text after** | **Barcode** |
|---|---|---|
| Hello 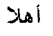 | Hello \|71070475 | Bilingual 1 |
| 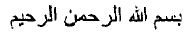 Barcode | \|768705 75040407 750485810506 750485811005 \|Barcode | Bilingual 2 |

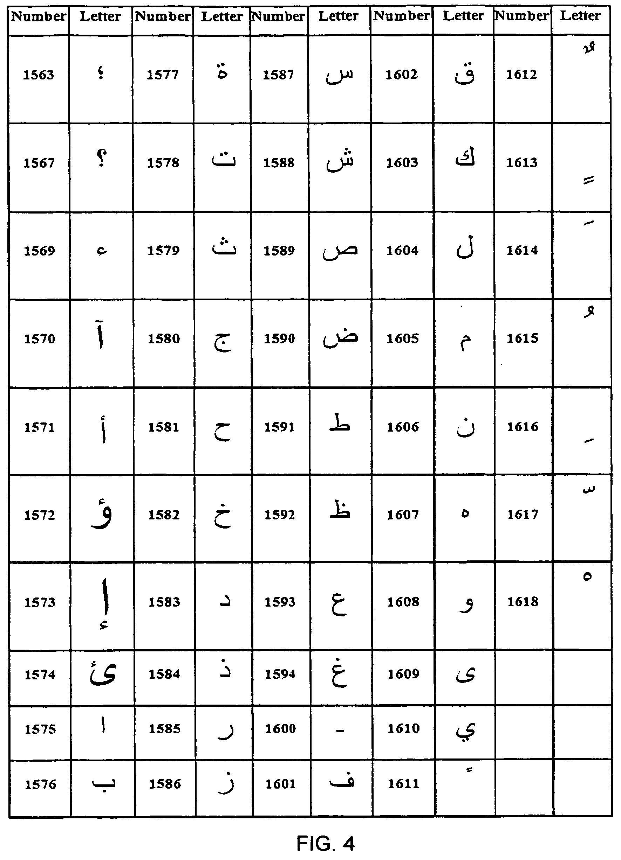

Before encoding the first bilingual text and the second bilingual text, each bilingual text is pre-processed to remove any instance of special characters. As is shown in Table 2, the first bilingual text and the second bilingual text do not include any special characters. Thus, during pre-processing, each bilingual text is analyzed to build statistics for the bilingual text. The statistics includes one or more of a number of Arabic characters, a number of white spaces, a number of lines, a number of tabs, a number of English characters, a number of transitions to Arabic from English, and a number of transitions to English from Arabic. Based on the statistics, an ASCII encoding scheme is utilized and a predefined encoding value associated with each of one or more characters of the plurality of characters is received. The one or more characters correspond to Arabic characters in each bilingual text. Thus, a predefined encoding value associated with each Arabic character of one or more Arabic characters is received. The predefined encoding value is received from a Unicode table illustrated in FIG. 4. FIG. 4 includes a predefined encoding value associated with each Arabic character. Further, as shown in FIG. 4, the predefined encoding value ranges from 1563 to 1618.

After receiving the predefined encoding value, a transitioning character is prefixed to a predefined encoding value associated with an Arabic character of the one or more Arabic characters. As shown in first row and second column of Table 2, a transitioning character "|" is added in the first bilingual text. The transitioning character indicates that a language corresponding to a character associated with a predefined encoding value preceding the predefined encoding value associated with each of the one or more Arabic characters is English. Alternatively, after receiving the predefined encoding value, a transitioning character is suffixed to a predefined encoding value associated with an Arabic character of the one or more Arabic characters. As shown in second row and second column of Table 2, a transitioning character "|" is added in the second bilingual text. The transitioning character indicates that a language corresponding to a character associated with a predefined encoding value following the predefined encoding value associated with each of the one or more Arabic characters is English. In an embodiment, a transitioning character suffixed to a predefined encoding value associated with an Arabic character of the one or more Arabic characters may be omitted during encoding. The transitioning character is omitted if the one or more Arabic character is not followed by an English character. For example, as shown in first row and second column of Table 2, the transitioning character has been omitted in "Hello|71070475" at the end.

Thereafter, the predefined encoding value associated with each of the one or more Arabic characters is modified to obtain a corresponding modified encoding value. In order to obtain the corresponding modified encoding value, the predefined encoding value is truncated. In an embodiment, for performing truncation on the predefined encoding value, one or more digits are removed from the predefined encoding value. As can be seen in FIG. 4, the predefined encoding value associated with the each of the one or more Arabic characters is four digits in length. While encoding, it would take 2 bytes to represent the four digits associated with the predefined encoding value. However, it can be noticed that the predefined encoding value associated with the one or more Arabic characters starts with digit "1". Now, if the digit "1" is removed from the predefined encoding value of the one or more Arabic characters, there is no difference in representation of the predefined encoding value. However, the length of the predefined encoding value would decrease from four digits to three. Thus, the digit "1" is removed from the predefined encoding value of the one or more Arabic characters.

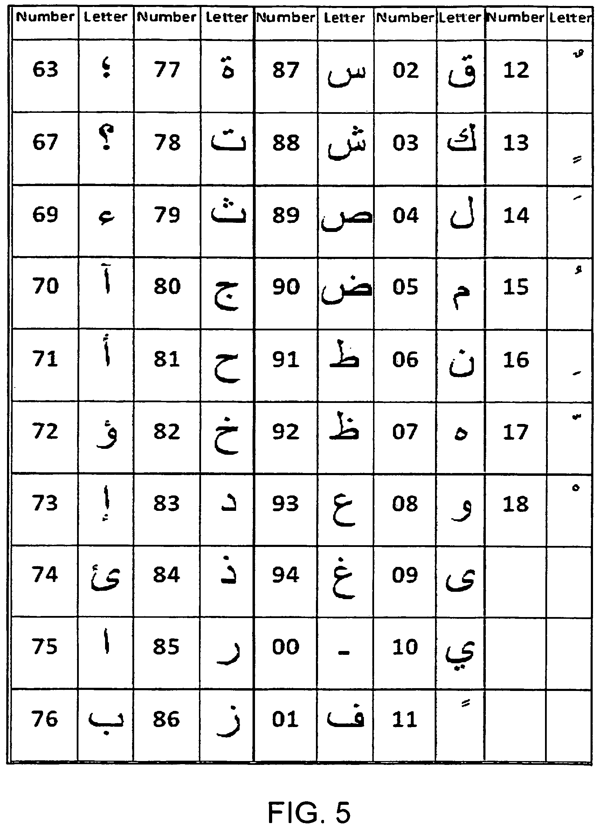

Similarly, after removing the digit "1" from the predefined encoding value, each predefined encoding value starts either with digit "5" or with digit "6". Also, the last two digits following digit "5" or digit "6" are unique and are non-repeating. Thus, if the digit "5" and digit "6" are removed, there is no collision between the predefined encoding values as each predefined encoding value associated with an Arabic character is unique. As shown in FIG. 4, predefined encoding values from 63 to 94 are always preceded by digit 5 and predefined encoding values from 00 to 18 are always preceded by 6. Thus, the length of the predefined encoding value may be decreased from three digits to two digits. By decreasing the predefined encoding values to two digits, one byte may be only required to represent each Arabic character of the one or more Arabic characters. Thus, corresponding modified encoding value is obtained in response to truncating the predefined encoding value associated with each of the one or more Arabic characters. The corresponding modified encoding value associated with each of the one or more Arabic characters is illustrated in FIG. 5.

After obtaining the corresponding modified encoding value, the one or more Arabic characters are encoded using the corresponding modified encoding value. The one or more Arabic characters associated with the first bilingual text, encoded using the corresponding modified encoding value is shown in first row and second column in Table 2. Similarly, the one or more Arabic characters associated with the second bilingual text, and encoded using the corresponding modified encoding value is illustrated in second row and second column of Table 2.

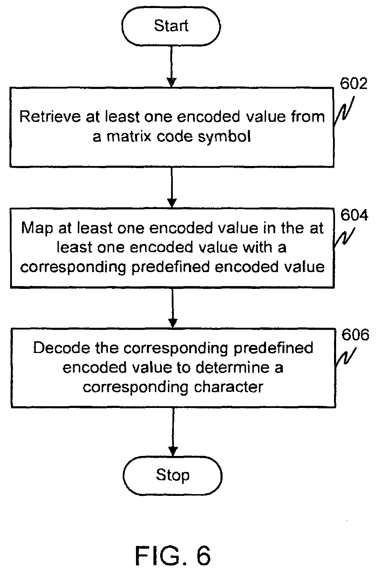

FIG. 6 illustrates a flowchart of a computer implemented method of decoding a matrix code symbol in accordance with an embodiment of the invention. The matrix code symbol includes a plurality of encoded values. An encoded value of the plurality of encoded values corresponds to a character. The character is associated with a language. In an embodiment, the language may be one of Arabic and English. At step 602, one or more encoded values from the matrix code symbol are retrieved. The one or more encoded values include one or more modified encoded values. A modified encoded value of the one or more modified encoded values is associated with an Arabic character. After retrieving the one or more encoded values, at step 604, each of the one or more modified encoded values is mapped with a corresponding predefined encoded value. A modified encoded value is shorter in length than a corresponding predefined encoded value. This is already explained in conjunction with FIG. 2.

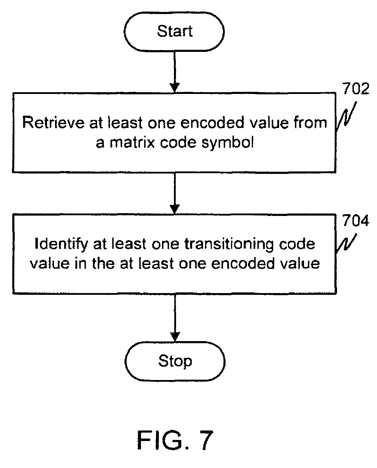

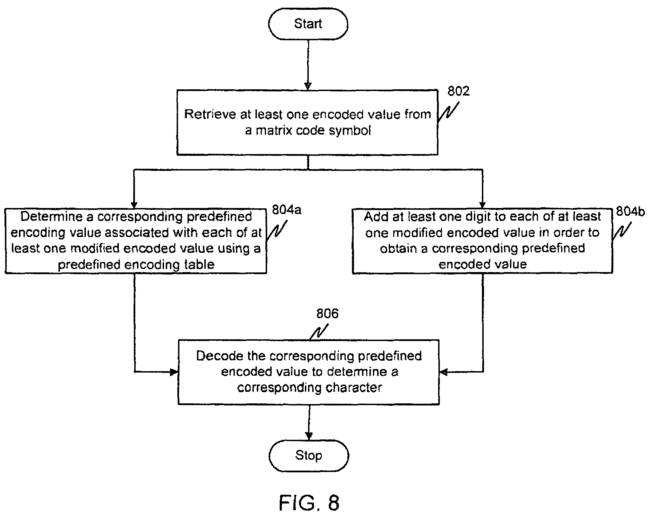

In order to map each of the one or more modified encoded values with the corresponding predefined encoded value, one or more transitioning code values are identified in the one or more encoded values. The one or more transitioning code values also indicate occurrences of the one or more modified encoded values. For example, if a string of encoded values include one or more predefined encoded values, and one or more modified encoded values, the one or more transitioning code values are used to indicate occurrences of the one or more modified encoded values in the string. This is further explained in conjunction with FIG. 7. After identifying the one or more transitioning code values, each of the one or more modified encoded values is mapped to the corresponding predefined encoded value. The mapping may be performed by determining the corresponding predefined encoded value associated with each of the one or more encoded values using a predefined encoding table. Examples of the predefined encoding table may include, but are not limited to an ACSII table, and a Unicode table. This is further explained in conjunction with FIG. 8. Alternatively, the mapping may be performed by adding one or more digits to each modified encoded value of the one or more modified encoded values in order to obtain the corresponding redefined encoded value. This is further explained in conjunction with FIG. 8. Thereafter, at step 606, the corresponding predefined encoded value is decoded to determine a corresponding character.

FIG. 7 illustrates a flowchart of a computer implemented method to identify one or more transitioning code values in the one or more encoded values in accordance with an embodiment of the invention. At step 702, the one or more encoded values are retrieved from the matrix code symbol. The one or more encoded values may be retrieved using one or more of a data matrix reader, a scanner, and a laser. Thereafter, at step 704, one or more transitioning code values are identified in the one or more encoded values. A transitioning code value of the one or more transitioning code values corresponds to an encoded value associated with a transitioning character. Examples of the transitioning character may include, but is not limited to "|", "*", "^", and "&". In an embodiment, a transitioning code value may correspond to ASCII value 124 associated with transitioning character "|". The transitioning code value 124 may be used to identify a language associated with a corresponding character of the one or more encoded values.

Based on the one or more identified transitioning code values, the one or more modified encoded values are identified in the one or more encoded values. For example, if a transitioning code value is identified after one or more encoded values corresponding to English characters, it may be inferred that an encoded value following the transitioning code value corresponds to a modified encoded value that is associated with an Arabic character. In the same manner, if a transitioning code value is identified after one or more Arabic encoded values, it may be inferred that an encoded value following the transitioning code value corresponds to an English character.

FIG. 8 illustrates a flowchart of a computer implemented method of obtaining a corresponding predefined encoded value associated with each of the one or more modified encoded values in accordance with an embodiment of the invention. At step 802, one or more encoded values are retrieved from a matrix code symbol. The one or more encoded values include one or more modified encoded values. The one or more modified encoded values are identified in the one or more encoded values using one or more transitioning code values. This explained in conjunction with FIG. 7. After retrieving the one or more encoded values, at step 804a, a corresponding predefined encoded value associated with each of the one or more modified encoded values is determined. The corresponding predefined encoded value is determined using a predefined encoding table. Example of the predefined encoding table may include, but is not limited to an ASCII table, and a Unicode table. The predefined encoding table is used to map each of the one or more modified encoded values to the corresponding predefined encoded value. The mapping may be performed by one of a look-up operation, and matching of one or more digits present in the one or more modified encoded values. For example, digits associated with a modified encoded value "66" of an Arabic character may be used as a query for searching in a range "1563 to 1618" associated with Arabic characters in the Unicode table. In response, a matching value "1566" that includes the modified encoded value as its last two digits is retrieved from the predefined encoding table.

Alternatively, at step 804b, one or more digits may be added to each of the one or more modified encoded values in order to obtain the corresponding predefined encoded value. The number of digits to be added to each of the one or more modified encoded values may be predefined. For example, two digits may be added to each of the one or more modified encoded values to obtain the corresponding predefined encoded value. Referring back to modified encoding values of Arabic characters shown in the table in FIG. 5, length of each of the modified encoded values is equal to two. In order to obtain the corresponding predefined encoded value, digits 15 is added to the modified encoded values ranging from 63 to 94 and digits 16 is added to the modified encoded values ranging from 00 to 18. The corresponding predefined encoded value obtained by adding digits 15 and 16 is shown in table illustrated in FIG. 4.

Consider an exemplary embodiment as described herein, wherein a matrix code symbol is to be decoded to retrieve information present in a matrix code symbol. The matrix code symbol includes information associated with a first bilingual text and a second bilingual text as shown in Table 3.

**Table 3**

| **Barcode** | **Decoded Raw Alphanumeric English Text** | **Processed Bilingual Text** |
|---|---|---|
| Bilingual 1 | Hello \|71070475 | Hello 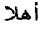 |
| Bilingual 2 | 768705 75040407 750485810506 750485811005 \|Barcode | 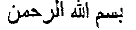 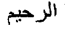 Barcode |

The first bilingual text to be retrieved from the matrix code symbol is represented in first row and third column of Table 3, and the second bilingual text to be retrieved from the matrix code symbol is represented in second row and third column of Table 3. The first bilingual text and the second bilingual text are retrieved by decoding the matrix code symbol. In order to decode the matrix code symbol, one or more encoded values from the matrix code symbol are retrieved. The one or more encoded values associated with the first bilingual text is represented in first row and second column of Table 3, and the one or more encoded values associated with the second bilingual text is represented in the second row and second column of Table 3. The one or more encoded values include one or more modified encoded values. The one or more modified encoded values correspond to Arabic characters present in the first bilingual text and the second bilingual text. The one or more modified encoded values are illustrated in first row and second column and second row and second column in Table 3.

After retrieving the one or more modified encoded values, each of the one or more modified encoded value is mapped with a corresponding predefined encoded value. A modified encoded value associated with an Arabic character is shorter in length than a corresponding predefined encoded value associated with the Arabic character. For example, the retrieved modified encoded value "71" associated with an Arabic character in the first row and second column in Table 3 is shorter in length than the corresponding predefined encoded value "1571" associated with the Arabic character. In order to identify the one or more modified encoded, one or more transitioning code values are identified in the one or more encoded values. A transitioning code value of the one or more transitioning code values is used to identify the one or modified encoded associated with Arabic languages.

In Table 3, the transitioning code value corresponds to encoded value associated with a transitioning character "|". The transitioning code value of the transitioning character "|" is 124 (not shown in Table 3). As shown in Table 3, first row and second column associated with the first bilingual text includes one instance of the transitioning code value. Similarly, the second row and second column associated with the second bilingual text includes two instances of the transitioning code value.

After identifying the one or more modified encoded values, each of the one or more modified encoded values is mapped to the corresponding predefined encoded value. In an embodiment, the mapping may be performed by determining the corresponding predefined encoded value associated with each of the one or more modified encoded values using a predefined encoding table. The predefined encoding table has already been explained with respect to FIG. 4. For example, modified encoded value "71" present in first row and second column is looked up in the predefined encoding table to determine the corresponding encoded value. As shown in FIG. 4, it is determined that the corresponding predefined encoded value associated with the modified encode value "71" is "1571". In the same manner, each modified encoded value associated with the first bilingual text and second bilingual text is looked up in the predefined encoding table to retrieve the corresponding predefined encoded value.

In another embodiment, one or more digits may be added to each of the one or more modified encoded values in order to obtain the corresponding predefined encoded value. The one or more digits to be added to each modified encoded values may be predefined. For example, digit 15 is added if the one or more modified encoded values are present in the range 63 to 94. Thus, 15 is added to the modified encoded value 71 to obtain 1571 which represents the corresponding predefined encoded value associated with 71. In the same manner, digit 16 is added, if the one or more modified encoded values are present in the range 00 to 18.

Thereafter, the corresponding predefined encoded value is decoded to determine a corresponding character. The corresponding character is determined using the predefined encoded table shown in FIG. 4. After decoding each of the corresponding predefined encoded value, the first bilingual text and the second bilingual text is obtained in the original format. The retrieved first bilingual text and the second bilingual text obtained after decoding each of the corresponding predefined encoded value is shown in first row and third column, and second row and third column of Table 3, respectively.

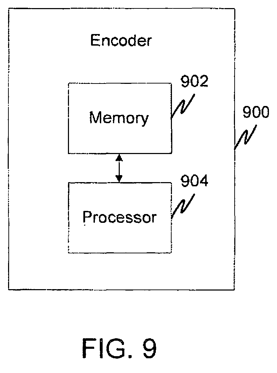

FIG. 9 illustrates an encoder 900 for encoding text on a matrix code symbol in accordance with an embodiment of the invention. The matrix code symbol is a data matrix barcode that includes black and white cells arranged in either a square or a rectangular pattern. This is already explained in conjunction with FIG. 2. Encoder 900 includes a memory 902, and a processor 904 that is coupled to memory 902. The text to be encoded on the matrix code symbol is received through an interface (not shown in FIG. 9) associated with encoder 900. In an embodiment, the interface may correspond to a text box configured to accommodate the text. The text includes a plurality of characters and each character of the plurality of characters corresponds to one or more languages. Further, the plurality of characters also includes one or more of one or more white spaces, one or more lines, one or more tabs, one or more pad characters, and one or more special characters. After receiving the text to be encoded through the interface, the text is saved in memory 902.

Before encoding the text on the matrix code symbol, the text may be pre-processed by processor 204. Processor 204 retrieves the text from memory 902 and preprocesses the text to remove one or more special characters present in the text. Further, processor 204 analyzes the text to identify the plurality of characters to be encoded on the matrix code symbol. Based on the analysis, processor 204 develops statistics for the plurality of characters present in the text and stores the statistics in memory 902. The statistics may include information about a number of characters associated with a language in the text, a number of digits in the text, a number of consecutive digits in the text, a number of white spaces, a number of new lines, a number of tabs, a number of pad characters, a number of special characters, a number of characters still to be added, a number of transition from a language to another language.

Thereafter, processor 204 encodes the text on the matrix code symbol based on the statistics using a character encoding scheme. Example of the character encoding scheme may include, but is not limited to an ASCII encoding scheme. Processor 204 retrieves a predefined encoding value associated with each of one or more characters of the plurality of characters in the text from a predefined encoding table such as an ASCII table and a Unicode table. In an embodiment, the predefined encoding table may be stored in memory 902. The retrieved predefined encoding value corresponds to one of an equivalent ASCII number, and an equivalent Unicode number associated with each of the one or more characters. Processor 204 retrieves predefined encoding value based on a language associated with each of the one or more characters. This has already been explained in FIG. 2.

After retrieving the predefined encoding value, processor 204 prefixes a transitioning code value to a predefined encoding value associated with a character of the one or more characters. The transitioning code value indicates that a language corresponding to a character associated with a predefined encoding value preceding the predefined encoding value associated with the character is different from a language corresponding to the character. Alternatively, processor 204 suffixes a transitioning code value to a predefined encoding value associated with a character of the one or more characters. The transitioning code value is used to indicate that a language corresponding to a character associated with a predefined encoding value following the predefined encoding value associated with the character is different from a language corresponding to the character associated with the predefined encoding value. This has already been explained with respect to FIG. 3.

Thereafter, processor 204 modifies the predefined encoding value associated with each of the one or more characters to obtain a corresponding modified encoding value. In order to modify the predefined encoding value, processor 204 may truncate the predefined encoding value. Processor 204 may truncate the predefined encoding value by removing one or more digits from the predefined encoding value to obtain the corresponding modified encoding value. This has already been explained in conjunction with FIG. 2. After obtaining the corresponding modified encoding value, processor 204 encodes the one or more characters on the matrix code symbol using the corresponding modified encoding value.

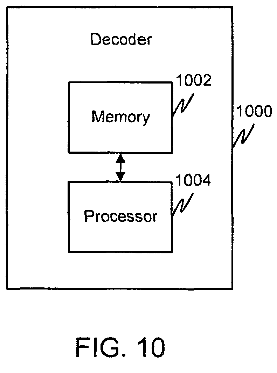

FIG. 10 illustrates a decoder 1000 for decoding a matrix code symbol in accordance with an embodiment of the invention. The matrix code symbol includes a plurality of encoded values. An encoded value of the plurality of encoded values corresponds to a character where the character is associated with a language. Decoder 1000 includes a memory 1002, and a processor 1004 coupled to memory 1002, The plurality of encoded values are retrieved from the matrix code symbol and stored in memory 1002. The plurality of encoded values may be retrieved using one or more of a data matrix reader, a data matrix scanner, and a laser. After storing the plurality of encoded values in memory 1002, processor 1004 retrieves one or more modified encoded values from the plurality of encoded values. Processor 1004 identifies the one or more modified encoded values by identifying one or more transitioning code values present in one or more encoded values of the plurality of encoded values. The one or more transitioning code values identify a language associated with a character of the one or more encoded values.

After identifying the one or more modified encoded values, processor 1004 maps each of the one or more modified encoded values to a corresponding predefined encoded value. Processor 1004 maps each of the one or more modified encoded values using a predefined encoding table. Example of the predefined encoding table may include, but is not limited to an ASCII table, and a Unicode table. Alternatively, processor 1004 may add one or more digits to each of the one or more modified encoded values in order to obtain the corresponding predefined encoded value. This has already been explained with respect to FIG. 8. Thereafter, processor 1004 decodes the corresponding predefined encoded value to determine a corresponding character.

Various embodiments of the method described herein facilitate in encoding and decoding text on a matrix code symbol. The method receives a predefined encoding value associated with each of one or more characters of the plurality of characters and modifies the predefined encoding value associated with each of the one or more characters to obtain a corresponding modified encoding value. The corresponding modified encoding value is shorter in length than the corresponding predefined encoding value. This facilitates in increasing capacity of storing text on the matrix code symbol. Further, the method retrieves one or more encoded values from the matrix code symbol and maps each of one or more modified encoded values in the one or more encoded values with a corresponding predefined encoded value.

Those skilled in the art will realize that the above recognized advantages and other advantages described herein are merely exemplary and are not meant to be a complete rendering of all of the advantages of the various embodiments of the present invention.

In the foregoing specification, specific embodiments of the present invention have been described. However, one of ordinary skill in the art appreciates that various modifications and changes can be made without departing from the scope of the present invention as set forth in the claims below. Accordingly, the specification and figures are to be regarded in an illustrative rather than a restrictive sense, and all such modifications are intended to be included within the scope of the present invention. The benefits, advantages, solutions to problems, and any element(s) that may cause any benefit, advantage, or solution to occur or become more pronounced are not to be construed as critical, required, or essential features or elements of any or all of the claims. The present invention is defined solely by the appended claims.

## Claims

1. A computer implemented method of encoding a text on a matrix code symbol (104), wherein the text comprises a plurality of characters corresponding to multiple languages, the computer implemented method comprising:
receiving a first predefined encoding value associated with a first character;
prefixing or suffixing the first predefined encoding value with a transitioning code value, if a language corresponding to the first character is different from a language corresponding to a second character associated with a second predefined encoding value preceding the first predefined encoding value ;
truncating at least the first digit of the first predefined encoding value to obtain a corresponding modified encoding value; and
encoding the first character into the matrix code symbol (104) using the corresponding modified encoding value.

2. The computer implemented method of claim 1, wherein the multiple languages include Arabic and English.

3. The computer implemented method of claim 1, further comprising removing at least one special character from the plurality of characters prior to encoding the text.

4. The computer implemented method according to any one of the preceding claims, wherein the predefined encoding value corresponds to one of a Unicode value, and an ASCII value.

5. A computer implemented method of decoding a matrix code symbol (104), the computer implemented method comprising:
retrieving an encoded value from the matrix code symbol (104), wherein the encoded value comprises a modified encoded value;
mapping the modified encoded value to a corresponding predefined encoded value by adding at least one digit to the front of the modified encoded value wherein the predefined encoded value is associated with a character which corresponds to one of multiple languages, and wherein said mapping includes mapping the modified encoded value to a predefined encoded value associated with a character of a different language than a preceding language if a transitioning code value is identified in the modified encoded value; and
decoding the corresponding predefined encoded value by using a predefined encoding table to determine a corresponding character.

6. The computer implemented method of claim 5, wherein the multiple languages include Arabic and English.

7. The computer implemented method according to any one of claims 5 or 6, wherein the predefined encoding table corresponds to one of a Unicode table, and an ASCII table.

8. An encoder (102, 900) for encoding text on a matrix code symbol (104), wherein the text comprises a plurality of characters corresponding to multiple languages, the encoder (102, 900) comprising:
a memory (902) for storing a first predefined encoding value associated with a first character; and
a processor (904) coupled to the memory (902), wherein the processor (904) is configured to:
prefix or suffix the first predefined encoding value with a transitioning code value, if a language corresponding to the first character is different from a language corresponding to a second character associated with a second predefined encoding value preceding the first predefined encoding value ;
truncate at least the first digit of the first predefined encoding value to obtain a corresponding modified encoding value; and
encode the first character into the matrix code symbol (104) using the corresponding modified encoding value.

9. The encoder (102, 900) of claim 8, wherein the processor (904) is further configured to remove at least one special character from the plurality of characters prior to encoding the text.

10. A decoder (106, 1000) for decoding a matrix code symbol (104), the decoder (106, 1000) comprising:
a memory (1002) for storing a modified encoded value from the matrix code symbol (104); and
a processor (1004) coupled to the memory (1002), wherein the processor (1004) is further configured to:
map the modified encoded value to a corresponding predefined encoded value by adding at least one digit to the front of the modified encoded value wherein the predefined encoded value is associated with a character which corresponds to one of multiple languages, and wherein mapping includes mapping the modified encoded value to a predefined encoded value associated with a character of a different language than a preceding language if a transitioning code value is identified in the modified encoded value; and
decode the corresponding predefined encoded value by using a predefined encoding table to determine a corresponding character.

## Patentansprüche

1. Computerimplementiertes Verfahren zum Codieren von Text auf einem Matrix-Codesymbol (104), wobei der Text eine Vielzahl von Zeichen umfasst, die mehreren Sprachen entsprechen, wobei das computerimplementierte Verfahren umfasst:
Empfangen eines ersten vorab definierten Codierwerts, der mit einem ersten Zeichen verknüpft ist;
dem ersten vorab definierten Codierwert Voranstellen oder Anhängen eines Übergangscodewerts, wenn sich eine Sprache, die dem ersten Zeichen entspricht, von einer Sprache unterscheidet, die einem zweiten Zeichen entspricht, das mit einem zweiten vorab definierten Codierwert verknüpft ist, der dem ersten vorab definierten Codierwert vorangeht;
Trunkieren von wenigstens der ersten Ziffer des ersten vorab definierten Codierwerts, um einen entsprechenden modifizierten Codierwert zu erhalten; und
Codieren des ersten Zeichens in das Matrix-Codiersymbol (104) unter Verwendung des entsprechenden modifizierten Codzerwerts.

2. Computerimplementiertes Verfahren nach Anspruch 1, wobei die mehreren Sprache Arabisch und Englisch einschließen.

3. Computerimplementiertes Verfahren nach Anspruch 1, ferner umfassend Entfernen von wenigstens einem speziellen Zeichen aus der Vielzahl von Zeichen vor Codieren des Textes.

4. Computerimplementiertes Verfahren nach einem der vorangehenden Ansprüche, wobei der vorab definierte Codierwert einem von einem Unicode-Wert und einem ASCII-Wert entspricht.

5. Computerimplementiertes Verfahren zum Dekodieren eines Matrix-Codesymbols (104), wobei das computerimplementierte Verfahren umfasst:
Holen eines codierten Werts aus dem Matrix-Codesymbol (104), wobei der codierte Wert einen modifizierten codierten Wert umfasst;
Abbilden des modifizierten codierten Werts auf einen entsprechenden vorab definierten codierten Wert durch Hinzufügen von wenigstens einer Ziffer vor dem modifizierten codierten Wert, wobei der vorab definierte codierte Wert mit einem Zeichen verknüpft ist, das einer von mehreren Sprachen entspricht, und wobei das Abbilden Abbilden des modifizierten codierten Werts auf einen vorab definierten codierten Wert einschließt, der mit einem Zeichen einer anderen Sprache als eine vorangehende Sprache verknüpft ist, wenn ein Übergangscodewert in dem modifizierte codierten Wert festgestellt wird; und
Decodieren des entsprechenden vorab definierten codierten Werts durch Verwendung einer vorab definierten Codiertabelle, um ein entsprechendes Zeichen zu ermitteln.

6. Computerimplementiertes Verfahren nach Anspruch 5, wobei die mehreren Sprachen Arabisch und Englisch einschließen.

7. Computerimplementiertes Verfahren nach einem der Ansprüche 5 oder 6, wobei die vorab definierte Codiertabelle einer Unicode-Tabelle oder einer ASCII-Tabelle entspricht.

8. Codierer (102, 900) zum Codieren von Text auf ein Matrix-Codesymbol (104), wobei der Text eine Vielzahl von Zeichen umfasst, die mehreren Sprachen entsprechen, wobei der Codierer (102, 900) umfasst:
einen Speicher (902) zum Speichern eines ersten vorab definierten Codierwerts, der mit einem ersten Zeichen verknüpft ist; und
einen mit dem Speicher (902) gekoppelten Prozessor (904), wobei der Prozessor (904) konfiguriert ist, um:
dem ersten vorab definierten Codierwert einen Übergangscodewert voranzustellen oder anzuhängen, wenn sich eine Sprache, die dem ersten Zeichen entspricht, von einer Sprache unterscheidet, die einem zweiten Zeichen entspricht, das mit einem zweiten vorab definierten Codierwert verknüpft ist, der dem ersten vorab definierten Codierwert vorangeht;
wenigstens die erste Ziffer des ersten vorab definierten Codierwerts zu trunkieren, um einen entsprechenden modifizierten Codierwert zu erhalten; und
das erste Zeichen in das Matrix-Codesymbol (104) unter Verwendung des entsprechenden modifizierten Codierwert zu codieren.

9. Codierer (102, 900) nach Anspruch 8, wobei der Prozessor (904) ferner konfiguriert ist, um wenigstens ein spezielles Zeichen aus der Vielzahl von Zeichen vor Codieren des Textes zu entfernen.

10. Decodierer (106, 1000) zum Decodieren eines Matrix-Codesymbols (104), wobei der Decodierer (106, 1000) umfasst:
einen Speicher (1002) zum Speichern eines modifizierten codierten Werts aus dem Matrix-Codesymbol (104); und
einen mit dem Speicher (1002) gekoppelten Prozessor (1004), wobei der Prozessor (1004) ferner konfiguriert ist, um:
den modifizierten codierten Wert auf einen entsprechenden vorab definierten codierten Wert durch Hinzufügen von wenigstens einer Ziffer vor dem modifizierten codierten Wert abzubilden, wobei der vorab definierte codierte Wert mit einem Zeichen verknüpft ist, das einer von mehreren Sprachen entspricht, und wobei das Abbilden Abbilden des modifizierten codierten Werts auf einen vorab definierten codierten Wert einschließt, der mit einem Zeichen einer anderen Sprache als eine vorangehende Sprache verknüpft ist, wenn ein Übergangscodewert in dem modifizierten codierten Wert festgestellt wird; und
den entsprechenden vorab definierten codierten Wert durch Verwendung einer vorab definierten Codiertabelle zu decodieren, um ein entsprechendes Zeichen zu bestimmen.

## Revendications

1. Procédé, mis en oeuvre par ordinateur, de codage d'un texte sur un symbole de code matriciel (104), dans lequel le texte comprend une pluralité de caractères correspondant à des langues multiples, le procédé mis en oeuvre par ordinateur consistant à :
recevoir une première valeur de codage prédéfinie associée à un premier caractère ;
préfixer ou suffixer la première valeur de codage prédéfinie avec une valeur de code de transition, si une langue correspondant au premier caractère est différente d'une langue correspondant à un second caractère associé à une seconde valeur de codage prédéfinie précédant la première valeur de codage prédéfinie ;
tronquer au moins le premier chiffre de la première valeur de codage prédéfinie en vue d'obtenir une valeur de codage modifiée correspondants et
coder le premier caractère dans le symbole de code matriciel (104) en utilisant la valeur de codage modifiée correspondante.

2. Procédé mis en oeuvre par ordinateur selon la revendication 1, dans lequel les multiples langues incluent l'arabe et l'anglais.

3. Procédé mis en oeuvre par ordinateur selon la revendication 1, consistant en outre à supprimer au moins un caractère spécial de la pluralité de caractères préalablement au codage du texte.

4. Procédé mis en oeuvre par ordinateur selon l'une quelconque des revendications précédentes, dans lequel la valeur de codage prédéfinie correspond à l'une d'une valeur Unicode, et d'une valeur ASCII.

5. Procédé, mis en oeuvre par ordinateur, de décodage d'un symbole de code matriciel (104), le procédé mis en oeuvre par ordinateur consistant à :
extraire une valeur codée du symbole de code matriciel (104), dans lequel la valeur codée comprend une valeur codée modifiée ;
mettre en concordance la valeur codée modifiée sur une valeur codée prédéfinie correspondante, en ajoutant au moins un chiffre à l'avant de la valeur codée modifiée, dans lequel la valeur codée prédéfinie est associée à un caractère qui correspond à l'une des multiples langues, et dans lequel ladite mise en concordance consiste à mettre en concordance la valeur codée modifiée sur une valeur codée prédéfinie associée à un caractère d'une langue différente de la langue précédente, si une valeur de code de transition est identifiée dans la valeur codée modifiée ; et
décoder la valeur codée prédéfinie correspondante en utilisant une table de codage prédéfinie, en vue de déterminer un caractère correspondant.

6. Procédé mis en oeuvre par ordinateur selon la revendication 5, dans lequel les multiples langues incluent l'arabe et l'anglais.

7. Procédé mis en oeuvre par ordinateur selon l'une quelconque des revendications 5 ou 6, dans lequel la table de codage prédéfinie correspond à l'une d'une table Unicode et d'une table ASCII.

8. Codeur (102, 900) destiné à coder un texte sur un symbole de code matriciel (104), dans lequel le texte comprend une pluralité de caractères correspondant à des langues multiples, le codeur (102, 900) comprenant :
une mémoire (902) destinée à stocker une première valeur de codage prédéfinie associée à un premier caractère ; et
un processeur (904) couplé à la mémoire (902), dans lequel le processeur (904) est configuré de manière à :
préfixer ou suffixer la première valeur de codage prédéfinie avec une valeur de code de transition, si une langue correspondant au premier caractère est différente d'une langue correspondant à un second caractère associé à une seconde valeur de codage prédéfinie précédant la première valeur de codage prédéfinie ;
tronquer au moins le premier chiffre de la première valeur de codage prédéfinie en vue d'obtenir une valeur de codage modifiée correspondante ; et
coder le premier caractère dans le symbole de code matriciel (104) en utilisant la valeur de codage modifiée correspondante.

9. Codeur (102, 900) selon la revendication 8, dans lequel le processeur (904) est en outre configuré de manière à supprimer au moins un caractère spécial de la pluralité de caractères préalablement au codage du texte.

10. Décodeur (106, 1000) destiné à décoder un symbole de code matriciel (104), le décodeur (106, 1000) comprenant :
une mémoire (1002) destinée à stocker une valeur codée modifiée provenant du symbole de code matriciel (104) ; et
un processeur (1004) couplé à la mémoire (1002), dans lequel le processeur (1004) est en outre configuré de manière à :
mettre en concordance la valeur codée modifiée sur une valeur codée prédéfinie correspondante, en ajoutant au moins un chiffre à l'avant de la valeur codée modifiée, dans lequel la valeur codée prédéfinie est associée à un caractère qui correspond à l'une des multiples langues, et dans lequel ladite mise en concordance consiste à mettre en concordance la valeur codée modifiée sur une valeur codée prédéfinie associée à un caractère d'une langue différente de la langue précédente, si une valeur de code de transition est identifiée dans la valeur codée modifiée ; et
décoder la valeur codée prédéfinie correspondante en utilisant une table de codage prédéfinie, en vue de déterminer un caractère correspondant.
